# EUROPÄISCHE PATENTANMELDUNG

(11) **EP 2 078 508 A1**
(43) Veröffentlichungstag der Anmeldung: **15.07.2009**
(21) Anmeldenummer: 08000524.2
(22) Anmeldetag: 12.01.2008
(51) Int. Cl.: A61C 1/00, A61C 1/08

(54) **Medizinisches, insbesondere dentales, handstück**

(71) Anmelder: W & H Dentalwerk Bürmoos GmbH, 5111 Bürmoos (AT)
(72) Erfinder: Bruckmoser, Andreas, 5112 Lamprechtshausen (AT); Helfenbein, Gerald, 5133 Gilgenberg (AT); Putz, Stefan, 5110 Oberndorf (AT)

(57) **Zusammenfassung**

Medizinisches, insbesondere dentales, Handstück (1) umfassend ein Antriebselement (11) zum Antreiben einer Werkzeugaufnahme (2), eine Drehmomentbegrenzungseinheit zur Begrenzung des auf ein in der Werkzeugaufnahme (2) aufnehmbares Werkzeug wirkenden Drehmoments, wobei in der Drehmomentbegrenzungseinheit mehrere vorbestimmte Drehmomentgrenzwerte hinterlegt sind, und ein erstes Stellelement (3) zur Auswahl eines der vorbestimmten Drehmomentgrenzwerte, wobei die Drehmomentgrenzwerte in einer aufsteigenden Reihenfolge oder in einer absteigenden Reihenfolge auswählbar sind, und wobei die Reihenfolge, in der die vorbestimmten Drehmomentgrenzwerte auswählbar sind, umkehrbar ist. Das Handstück (1) umfasst des Weiteren eine Steuervorrichtung zur Ermittlung eines Messwerts eines Betriebsparameters des Handstücks (1), zum Vergleichen des Messwerts mit einem ersten Vorwarnwert, der geringer ist als ein vorbestimmter Grenzwert, und zur Abgabe eines ersten Vorwarn-Steuersignals bei Erreichen oder Überschreiten des ersten Vorwarnwertes, und eine mit der Steuervorrichtung verbundene Anzeigevorrichtung (7), die durch das erste Vorwarn-Steuersignal aktivierbar ist.

## Beschreibung

Die vorliegende Erfindung betrifft ein medizinisches, insbesondere dentales, Handstück mit einer Drehmomentbegrenzung nach dem Oberbegriff des Anspruchs 1.

Ein derartiges Handstück, das zum Beispiel für endodontische Anwendungen eingesetzt wird, ist aus der Patentschrift US 5,980,248 bekannt. Das Handstück weist einen Motor, ein durch den Motor in Rotation versetzbares Werkzeug und eine Drehmomentbegrenzungsvorrichtung auf. Die Drehmomentbegrenzungsvorrichtung umfasst unter anderem ein Stellglied mit einem Drehknopf oder Schalter und einem Stellwiderstand, über das der Anwender vorgegebene Drehmomentgrenzwerte auswählen kann. Während des Betriebs des Handstücks ermittelt eine Drehmomentmessvorrichtung den aktuellen Drehmomentwert und leitet diesen an eine Steuereinheit, die den aktuellen Drehmomentwert mit dem ausgewählten Drehmomentgrenzwert vergleicht. Ergibt der Vergleich, dass der aktuelle Drehmomentwert den Drehmomentgrenzwert erreicht hat, so stoppt die Steuereinheit den Motor oder bewirkt eine Umkehrung der Drehrichtung.

Angrenzend an den Drehknopf ist eine Anzeigevorrichtung mit mehreren über- bzw. nebeneinander angeordneten Leuchtdioden (LEDs) vorgesehen, die den aktuellen, vom Anwender ausgewählten Drehmomentgrenzwert anzeigt (siehe insbesondere Figur 2B der US 5,980,248). Jede LED entspricht dabei einem bestimmten Drehmomentgrenzwert. Bei den der Anmelderin bekannten Handstücken erfolgt die Auswahl des Drehmomentgrenzwerts über einen Taster, wobei bei jedem Druck auf den Taster der nächst höhere Drehmomentgrenzwert ausgewählt wird. Entsprechend leuchtet mit jedem Tastendruck eine dem ausgewählten Drehmomentgrenzwert zugeordnete LED auf der Anzeigevorrichtung auf. Wird, nachdem der höchste Drehmomentgrenzwert - zum Beispiel 4,5 Ncm - erreicht wurde, der Taster wieder betätigt, so wird der niedrigste Drehmomentgrenzwert - zum Beispiel 0,5 Ncm - ausgewählt. Die Auswahl des Drehmomentgrenzwerts erfolgt somit in einer Endlosschleife in aufsteigender Richtung vom niedrigsten zum höchsten Drehmomentgrenzwert.

Die Verwendung eines Handstücks zur Wurzelkanalbehandlung erfolgt üblicherweise gemäß zwei unterschiedlichen Behandlungsmethoden. Bei der ersten Methode, die oftmals als "Step-back-Methode" oder "Single-Length-Methode" bezeichnet wird, erfolgt die Behandlung des Wurzelkanals von der Wurzelkanalspitze in Richtung der Krone des Zahns. Der Zahnarzt wählt dazu zu Beginn der Behandlung aus seinem Werkzeug- oder Feilenset ein Werkzeug mit einem geringen Durchmesser aus und dringt damit bis in die Spitze des Wurzelkanals vor, d.h. in den Abschnitt der Zahnwurzel, der am weitesten von der Zahnkrone entfernt ist. In den folgenden Behandlungsschritten wählt er sukzessive Feilen mit größeren Durchmessern, um damit Wurzelkanalabschnitte mit größerem Durchmesser, die sich näher an der Zahnkrone befinden, zu bearbeiten. Im Laufe der Behandlung eines einzigen Wurzelkanals kommen damit oftmals vier, fünf oder sechs Feilen mit unterschiedlichen Durchmessern zum Einsatz.

Da bei der Verwendung von Feilen mit geringeren Durchmessern, insbesondere in den enger werdenden und sich verjüngenden Spitzen der Wurzelkanäle, auch die Gefahr steigt, dass eine Feile bricht, wählen die Zahnärzte am Beginn der Behandlung gemäß der "Single-Length-Methode" einen niedrigen Drehmomentgrenzwert, bei dem das Handstück bzw. das Werkzeug gestoppt oder dessen Drehrichtung umgekehrt werden soll. Sobald der Zahnarzt im Lauf der Behandlung eine dünne Feile gegen eine Feile mit einem größeren Durchmesser austauscht, erhöht er auch den Drehmomentgrenzwert, um mehr Drehmoment auf das zu behandelnde Gewebe zu übertragen und einen schnelleren Behandlungsfortschritt zu erzielen. Zur Auswahl des höheren Drehmomentgrenzwerts betätigt der Zahnarzt wie oben beschrieben den Taster des Handstücks, wobei die in aufsteigender Reihenfolge auswählbaren Drehmomentgrenzwerte den Erfordernissen bzw. dem Behandlungsverlauf der "Step-back-Methode" oder "Single-Length-Methode" entsprechen.

Bei einem zweiten, alternativen Behandlungsverfahren, das als "Crown-down-Methode" bezeichnet wird, beginnt der Zahnarzt mit der Behandlung des Wurzelkanals an dessen oberen, der Zahnkrone zugewandtem Ende und dringt während der Behandlung weiter in den Zahnwurzelkanal ein. Da der Zahnwurzelkanal mit größerer Entfernung von der Zahnkrone schmäler wird, wechselt der Zahnarzt im Laufe der Behandlung das ursprünglich im Handstück eingespannte Werkzeug mit einem größeren Durchmesser gegen andere Werkzeuge mit geringeren Durchmessern aus und verringert gleichzeitig auch den Drehmomentgrenzwert, bei dem das Handstück bzw. das Werkzeug gestoppt oder dessen Drehrichtung umgekehrt werden soll.

Bei dem oben beschriebenen Handstück, bei dem die Auswahl des Drehmomentgrenzwerts in einer Endlosschleife in aufsteigender Richtung vom niedrigsten zum höchsten Drehmomentgrenzwert erfolgt, bedeutet dies jedoch, dass der Zahnarzt bei der Anwendung der "Crown-down-Methode" bei jeder Verringerung des Drehmomentgrenzwerts alle Drehmomentgrenzwerte auswählen muss, d.h. die gesamte Endlosschleife durchlaufen muss, um von einem höheren Drehmomentgrenzwert zum nächst niedrigeren Drehmomentgrenzwert zu gelangen. Bei dem in Figur 2B der Schrift US 5,980,248 dargestellten Beispiel der Anzeigevorrichtung mit acht LEDs und somit acht Drehmomentgrenzwerten, bedeutet dies, dass der Zahnarzt bei jeder Änderung des Drehmomentgrenzwerts sieben Mal den Taster zu betätigen hat, um von einem höheren Drehmomentgrenzwert zum nächst niedrigen Drehmomentgrenzwert zu gelangen. Dies ist eine für den Zahnarzt lästige und zeitaufwendige Prozedur, die die Behandlung unnötig verzögert und den Zahnarzt ablenkt. Es besteht insbesondere auch die Gefahr, dass der Zahnarzt einen unpassenden Drehmomentgrenzwert auswählt, wenn er den Taster zu oft oder zu wenige Male drückt.

Der vorliegenden Erfindung liegt daher die Aufgabe zugrunde ein Handstück zu schaffen, das die oben genannten Nachteile nicht aufweist und das insbesondere eine verbesserte Möglichkeit der Auswahl der Drehmomentgrenzwerte bei Anwendung des Handstücks in der "Crown-down-Methode" bietet.

Diese Aufgabe wird gemäß der vorliegenden Erfindung durch ein medizinisches, insbesondere dentales, Handstück mit den Merkmalen des Anspruchs 1 gelöst. Besonders vorteilhafte Ausführungsformen sind in den Unteransprüchen angeführt.

Gemäß einer bevorzugten Ausführungsform umfasst das medizinische, insbesondere dentale, Handstück ein Antriebselement zum Antreiben einer in Bewegung versetzbaren Werkzeugaufnahme, eine Drehmomentbegrenzungseinheit zur Begrenzung des auf ein in der Werkzeugaufnahme aufnehmbares Werkzeug wirkenden Drehmoments, wobei in der Drehmomentbegrenzungseinheit mehrere vorbestimmte Drehmomentgrenzwerte hinterlegt sind, und ein erstes Stellelement zur Auswahl eines der vorbestimmten Drehmomentgrenzwerte, wobei die vorbestimmten Drehmomentgrenzwerte in einer aufsteigenden Reihenfolge oder in einer absteigenden Reihenfolge auswählbar sind und wobei die Reihenfolge, in der die vorbestimmten Drehmomentgrenzwerte auswählbar sind, umkehrbar ist. Der Anwender kann somit für jede Behandlung oder auch für einzelne Behandlungsschritte je nach Behandlungsmethode oder persönlicher Präferenz bestimmen, ob die Drehmomentgrenzwerte in aufsteigender oder in absteigender Reihenfolge auswählbar sind. Am Handstück ist somit ein Schaltelement, insbesondere ein Taster oder ein Schalter, für den Anwender zum Umschalten zwischen der aufsteigenden Reihenfolge oder der absteigenden Reihenfolge vorgesehen.

Der Begriff Handstück umfasst alle geraden Handstücke oder Handgriffe, gebogene Handstücke oder Handgriffe, die im Dentalbereich oftmals als Winkelstücke bezeichnet werden, als auch Teile von Handstücken. Derartige Teile können zum Beispiel durch einen Griffabschnitt eines Handstücks gebildet sein, der zum Beispiel mit davon lösbaren Kopfabschnitten oder mit Getrieben für unterschiedliche Über- oder Untersetzungen verbindbar ist. Die Teile von Handstücken können jedoch auch als Motore, Zwischenstücke, Kupplungen, Adapter oder eigenständige Hülsenabschnitte ausgebildet sein. Unter der Bezeichnung Handstück werden des Weiteren sowohl schnurlose Handstücke, insbesondere mit einer austauschbaren oder aufladbaren Energiequelle, verstanden als auch Handstücke, die eine Versorgungsleitung und eine damit verbundene Steuer-, Regel- und / oder Versorgungseinheit umfassen. Diese letzt genannten, oftmals als "table-top-Geräte" bezeichneten Handstücke werden über die Versorgungseinheit zum Beispiel mit Antriebsenergie und / oder Behandlungsmedien versorgt und / oder tauschen Steuer-, Regel- oder Messsignale über die Versorgungseinheit aus. Das Antriebselement kann zum Beispiel eine oder mehrere Wellen, Getriebe oder einen Motor, insbesondere einen Elektromotor, umfassen. Die Werkzeugaufnahme ist als lösbare, bevorzugt kraft- oder formschlüssige Werkzeughalterung ausgebildet.

Als Drehmomentbegrenzungseinheit kann jede beliebige, elektrisch betriebene Drehmomentbegrenzungseinheit verwendet werden. Da derartige Drehmomentbegrenzungseinheiten bekannt sind, wird auf ihren Aufbau und ihre Funktionsweise nicht im Detail eingegangen. Eine Drehmomentbegrenzungseinheit umfasst unter anderem eine Drehmomentermittlungseinrichtung, insbesondere eine Motorstrommessvorrichtung, zur Ermittlung des aktuellen Drehmoments und einen Komparator zum Vergleich des aktuellen Drehmoments mit dem ausgewählten Drehmoment. Die Motorstrommessvorrichtung misst die dem Motor zugeführte Stromstärke, die dem Drehmoment, das auf das Werkzeug wirkt, proportional ist. Der Komparator vergleicht die gemessenen Werte der zugeführten Stromstärke mit dem vom Anwender ausgewählten Drehmomentgrenzwert und gibt ein Drehmomentbegrenzungssignal ab, falls der Drehmomentgrenzwert erreicht oder überschritten wird.

Eine mit dem Komparator verbundene Steuervorrichtung oder Steuerschaltung empfängt das Drehmomentbegrenzungssignal und begrenzt das auf das Werkzeug wirkende Drehmoment indem es den Motor abschaltet oder stoppt und damit die Arbeitsbewegung des Werkzeugs stoppt, die Drehrichtung des Motors und des Werkzeugs umkehrt oder sie in einen oszillierenden Betrieb versetzt. Durch diese Drehmomentbegrenzung wird der Bruch des Werkzeugs, insbesondere einer Feile, während der Behandlung verhindert.

In der Drehmomentbegrenzungseinheit sind mehrere, bevorzugt zwischen drei und acht, Drehmomentgrenzwerte hinterlegt, zum Beispiel in einem Speicherelement abgelegt. Die vorbestimmten Drehmomentgrenzwerte sind bevorzugt durch den Hersteller festgelegt und werden bei der Herstellung des Handstücks für den Anwender unveränderbar in der Drehmomentbegrenzungseinheit abgespeichert, zum Beispiel auf einem ROM-Speicherelement. Selbstverständlich ist es jedoch auch möglich, die Drehmomentgrenzwerte für den Anwender veränderbar oder überschreibbar auszubilden, zum Beispiel durch zu Verfügung stellen eines Schreib-Lese-Speichers. Die Drehmomentgrenzwerte betragen in einem bevorzugten Beispiel 4 Ncm, 2,5 Ncm, 1,5 Ncm, 1 Ncm und 0,5 Ncm. Sie können selbstverständlich auch andere Werte umfassen, wobei für dentale Anwendungen die Abstände zweier aufeinander folgender Drehmomentgrenzwerte bevorzugt zwischen 2 Ncm und 0,4 Ncm liegen.

Die Drehmomentgrenzwerte sind mittels eines ersten Stellelements durch den Anwender auswählbar. Damit kann der Anwender für unterschiedliche Behandlungen oder Behandlungsschritte, zum Beispiel in Abhängigkeit des Querschnitts des Zahnwurzelkanals und der verwendeten Feile, unterschiedliche Drehmomentgrenzwerte auswählen. Als Stellelement wird zum Beispiel ein Taster mit einem Druckknopf, ein Drehknopf oder ein Touchscreen verwendet. Die Drehmomentgrenzwerte sind in einer vorbestimmten Reihenfolge, zum Beispiel in aufsteigender oder absteigender Reihenfolge auswählbar. Dies bedeutet, dass ausgehend von dem aktuell ausgewählten Drehmomentgrenzwert mit jeder Betätigung des Stellelements ein höherer bzw. ein niedrigerer Drehmomentgrenzwert ausgewählt wird und somit als aktuell gültiger Grenzwert für den Komparator definiert ist. Bevorzugt wird bei Betätigung des Stellelements jeweils der nächst höhere bzw. der nächst niedrige Drehmomentgrenzwert ausgewählt, es sind selbstverständlich aber auch andere Schrittfolgen denkbar.

In einem bevorzugten Ausführungsbeispiel sind die Drehmomentgrenzwerte des Weiteren in einer Endlosschleife hinterlegt bzw. auswählbar, so dass, wenn ein Drehmomentgrenzwerte am Ende der Reihenfolge, i.e. der höchste oder niedrigste Drehmomentgrenzwerte, ausgewählt ist, durch die Betätigung des Stellelements der Drehmomentgrenzwert am anderen Ende der Reihenfolge ausgewählt wird.

Zur Umkehrung der Reihenfolge, in der die vorbestimmten Drehmomentgrenzwerte auswählbar sind, ist ein Stellelement vorgesehen. Dieses zweite Stellelement kann durch ein einfach oder bevorzugt durch ein doppelt oder mehrfach belegtes Stellelement gebildet sein. Als doppelt oder mehrfach belegte Stellelemente werden Stellelemente bezeichnet, über die zwei oder mehr Funktionen bedienbar oder auswählbar sind. Funktionen, die über ein doppelt oder mehrfach belegtes Stellelement bedienbar oder auswählbar sind, umfassen zum Beispiel die Auswahl der Drehrichtung (Links- oder Rechtslauf) und / oder das Aufrufen der Werkseinstellungen und / oder die Auswahl der Art der Drehrichtungsumkehr (durch den Anwender aktiv veranlasste Drehrichtungsumkehr oder automatische Drehrichtungsumkehr durch die Steuerung bei Eintreten eines Ereignisses, zum Beispiel dem Erreichen eines Grenzwerts, insbesondere des Drehmoments) und / oder die Auswahl eines veränderbaren Parameters, insbesondere der Drehzahl oder des Drehmoments, so dass Werte dieses Parameters für den Anwender einstellbar oder veränderbar sind. Die Auswahl der Funktionen erfolgt zum Beispiel durch unterschiedlich langes Betätigen des Stellelements oder durch unterschiedlich tiefes Eindrücken einer Druckknopfkappe. Der Vorteil dieser doppelt oder mehrfach belegten Stellelementen liegt in einer besseren Bedienbarkeit des Handstücks, da insbesondere bei Handstücken, bei denen Stellelemente im räumlich sehr begrenzten Griffbereich vorgesehen sind, ein mehrfach belegtes Stellelement, zum Beispiel die Druckkappe eines Tasters, größer und damit besser bedienbare ausgebildet werden kann, als wenn mehrere, einfach belegte Stellelemente, die kleiner ausgeführt werden müssen, vorgesehen sind.

Besonders bevorzugt ist das doppelt oder mehrfach belegte Stellelement durch das erste Stellelement zur Auswahl eines der vorbestimmten Drehmomentgrenzwerte gebildet, wodurch ein besonders hoher Bedienkomfort erreicht wird. Das erste Stellelement, das einen Taster umfasst, und die damit verbundene Steuerschaltung sind insbesondere derart ausgebildet, dass bei einer kurzen Betätigung des Tasters der Drehmomentgrenzwert geändert wird, wohingegen bei längerer Betätigung die Reihenfolge, in der die vorbestimmten Drehmomentgrenzwerte auswählbar sind, umgekehrt wird. Selbstverständlich sind jedoch auch andere Konfigurationen möglich.

In einem Ausführungsbeispiel ist das Handstück mit einer Anzeigevorrichtung mit separaten Anzeigeelementen für jeden Drehmomentgrenzwert versehen. Die Anzeigevorrichtung kann zum Beispiel mehrere, jeweils einem Drehmomentgrenzwert zugeordnete Anzeigeelement in Form von Lichtquellen, insbesondere von Leuchtdioden, aufweisen. Alternativ ist sie mit einer Flüssigkristallanzeige (LCD-Anzeige) versehen, wobei die Anzeigeelemente durch Symbol, z.B. Balken, auf der LCD-Anzeige repräsentiert werden.

In einem weiteren Ausführungsbeispiel umfasst das Handstück eine Außenhülse, ein an der Außenhülse vorgesehenes Stellelement zum Einschalten, zum Ausschalten und / oder zur Vorgabe der Drehzahl eines Antriebselements, das zum Antreiben einer in Bewegung versetzbaren Werkzeugaufnahme vorgesehen ist, eine Steuervorrichtung zur Ermittlung eines Messwerts eines Betriebsparameters des Handstücks, insbesondere des Drehmoments oder der Drehzahl, zum Vergleichen des Messwerts mit einem ersten Vorwarnwert, der geringer ist als ein vorbestimmter, insbesondere der Steuervorrichtung vorgegebener, Grenzwert, und zur Abgabe eines ersten Vorwarn-Steuersignals bei Erreichen oder Überschreiten des ersten Vorwarnwertes, und eine mit der Steuervorrichtung verbundene Anzeigevorrichtung, die durch das erste Vorwarn-Steuersignal aktivierbar ist.

Der Vorteil dieses Ausführungsbeispiels besteht darin, dass mit einem derartigen Handstück die Möglichkeit einer kontinuierlichen Behandlung geschaffen wird, bei der der Behandlungsfluss nicht oder nur unwesentlich gestört wird. Dazu sind die Steuervorrichtung und die Anzeigevorrichtung vorgesehen. Die Steuervorrichtung überwacht in bekannter Weise einen fixen oder vom Anwender einstellbaren Grenzwert eines Betriebsparameters, zum Beispiel des Drehmoments oder der Drehzahl, ermittelt einen aktuellen Messwert dieses Parameters und vergleicht den Messwert mit dem Grenzwert, wobei sie, wenn der Messwert den Grenzwert erreicht oder überschreitet, eine Maßnahme zum Schutz des Motors oder eines mit dem Handstück verbundenen Werkzeugs ausführt, zum Beispiel durch Abschalten oder Stoppen des Motors und damit Stoppen der Arbeitsbewegung des Werkzeugs, durch Umkehrung der Drehrichtung des Motors und des Werkzeugs oder durch Oszillation des Motors und des Werkzeugs. Zusätzlich vergleicht sie den Messwert mit einem Vorwarnwert, der geringer ist als der Grenzwert, zum Beispiel etwa 0,1% - 75%, bevorzugt etwa 0,1% - 50%, besonders bevorzugt etwa 0,1% - 25% geringer als der Grenzwert. Wird der Vorwarnwert erreicht oder überschritten, so gibt die Steuervorrichtung ein erstes Vorwarn-Steuersignal ab.

Die mit der Steuervorrichtung verbundene Anzeigevorrichtung, die durch das erste Vorwarn-Steuersignal aktivierbar ist, warnt den Anwender, dass der erste Vorwarnwert erreicht oder überschritten wurde. Die Anzeigevorrichtung ist als visuelle, taktile oder akustische Anzeigevorrichtung ausgebildet und gibt bei Erreichen oder Überschreiten des Vorwarnwerts ein entsprechendes, für den Anwender wahrnehmbares Signal ab. Bevorzugt gibt die Anzeigevorrichtung das Signal so lange ab oder wiederholt es, so lange der Vorwarnwert erreicht oder überschritten wird.

In vorteilhafter Weise wird damit erreicht, dass der Anwender das Handstück im Bereich des Vorwarnwerts, zum Beispiel bei etwa 75% des Grenzwerts, betreiben kann, womit er sicher stellt, dass die Behandlung im oberen Leistungsbereich des Handstücks bzw. des Werkzeugs stattfindet, so dass die Behandlung zügig fortschreitet, ohne dabei fürchten zu müssen, dass er im Fall einer geringen Zunahme des Messwerts während der Behandlung den Grenzwert sofort überschreiten würde, wodurch von der Steuervorrichtung eine der oben angeführten Maßnahmen, zum Beispiel dem Stoppen des Motors, ausgeführt würde, was zu einer Unterbrechung des Behandlungsflusses und Störung in der Konzentration des Anwenders führt. Auch ist ein derartiges Verfahren für das Werkzeug schonender als zum Beispiel ein mehrmaliges Ändern der Drehrichtung oder ein oszillierender Betrieb, womit die Gefahr der Beschädigung oder des Bruchs des Werkzeugs weiter reduziert wird.

In einer bevorzugten Weiterbildung diese Ausführungsbeispiels ist die Steuervorrichtung des Weiteren zur Abgabe eines zweiten Vorwarn-Steuersignals bei Erreichen oder Überschreiten eines zweiten Vorwarnwertes, der zwischen dem ersten Vorwarnwert und dem Grenzwert liegt, ausgebildet. Eine mit der Steuervorrichtung verbundene Anzeigevorrichtung, die durch das zweite Vorwarn-Steuersignal aktivierbar ist, warnt den Anwender, dass der zweite Vorwarnwert erreicht oder überschritten wurde. Die Anzeigevorrichtung ist als visuelle, taktile oder akustische Anzeigevorrichtung ausgebildet und gibt bei Erreichen oder Überschreiten des Vorwarnwerts ein entsprechendes, für den Anwender wahrnehmbares Signal ab.

Der Vorteil dieses bevorzugten Ausführungsbeispiels ist, dass der Anwender das Handstück in einem Vorzugsbereich zwischen den beiden Vorwarnwerten, zum Beispiel zwischen etwa 50% und 99%, bevorzugt zwischen etwa 65% und 90%, insbesondere zwischen etwa 75% und 85% des Grenzwerts betreiben kann, womit sicher gestellt ist, dass die Behandlung im oberen Leistungsbereich des Handstücks bzw. des Werkzeugs stattfindet, so dass die Behandlung zügig fortschreitet, und wobei durch den zweiten Vorwarnwert eine zusätzliche Sicherheit gegeben ist, dass der Grenzwert nicht erreicht wird.

Das Handstück gemäß dieser Weiterbildung umfasst entweder eine einzige Anzeigevorrichtung, die durch das erste und das zweite Vorwarn-Steuersignal aktivierbar ist oder zwei separate Anzeigevorrichtungen, die jeweils nur durch eines der beiden Vorwarn-Steuersignale aktivierbar sind. Ist nur eine Anzeigevorrichtung vorgesehen, so ist diese derart ausgebildet, dass sie unterschiedliche Signale in Abhängigkeit des ersten oder zweiten Vorwarn-Steuersignals abgibt, zum Beispiel eine kontinuierliche Lichtabgabe als Reaktion auf das erste Vorwarn-Steuersignal und eine blinkende Lichtabgabe als Reaktion auf das zweite Vorwarn-Steuersignal oder Vibrationen mit zwei unterschiedlichen Frequenzen. Sind zwei separate Anzeigevorrichtungen vorhanden, so können diese zur besseren Unterscheidung ebenfalls unterschiedliche Signale abgeben, zum Beispiel Licht mit unterschiedlichen Wellenlängen, es ist jedoch bei dieser Ausführungsform auch möglich, dass sie die gleichen Signale emittieren.

Gemäß einem besonders bevorzugten Ausführungsbeispiel ist zumindest eine Anzeigevorrichtung am oder angrenzend, insbesondere direkt angrenzend, an das Stellelement zur Steuerung des Antriebselements angeordnet. Dies erhöht den Bedienkomfort und die Möglichkeit einer kontinuierlichen Behandlung zusätzlich. Das Stellelement zur Steuerung des Antriebselements umfasst zum Beispiel einen Taster oder einen Schalter. Insbesondere bei Handstücken, bei denen das Stellelement im Griffbereich, am Griffelement, im Kopf- oder Halsbereich des Handstücks angeordnet ist, ist es für den Anwender somit nicht mehr nötig seinen Blick von der Behandlungsstelle und dem Handstück abzuwenden, um kontrollieren zu können, ob er das Handstück im Bereich des oder der Vorwarnwerte betreibt. Insbesondere ist die Außenhülse des Handstücks zumindest teilweise als Griffbereich, Griffelement, Kopf- oder Halsbereich des Handstücks ausgebildet, der einen länglichen, rohrförmigen, hohlen, gebogenen oder geraden Schaft umfasst. Der Griffbereich, das Griffelement, der Kopf- oder Halsbereich oder ein daran anschließender Außenhülsenabschnitt umgeben bevorzugt zumindest ein Antriebselement, zum Beispiel eine Welle oder einen Motor.

In einem anderen bevorzugten Ausführungsbeispiel umfasst das Handstück einen Vorderabschnitt mit einer Werkzeugaufnahme und einen damit verbundenen Versorgungsabschnitt mit einem dem Vorderabschnitt zugewandten, ersten Ende und einem zweiten Ende. Am Versorgungsabschnitt sind insbesondere ein Antriebselement, bevorzugt ein Elektromotor, und / oder eine Steuervorrichtung vorgesehen. Eine für den Anwender besonders bedienfreundliche Anordnung des Stellelements zum Einschalten, zum Ausschalten und / oder zur Vorgabe der Drehzahl des Antriebselements ist dadurch realisiert, dass das Stellelement am Vorderabschnitt oder am Versorgungsabschnitt, näher zum ersten Ende als zum zweiten Ende angeordnet, vorgesehen ist.

Um das Handstück an unterschiedliche Behandlungen, Behandlungsschritte oder an unterschiedliche anatomische Strukturen anpassen zu können, ist vorgesehen, dass der Grenzwert und / oder zumindest der erste oder der zweite Vorwarnwert einstellbar sind.

Um geringfügige Schwankungen des überwachten Betriebsparameters, insbesondere des Drehmoments, während der Behandlung zuzulassen, die zum Beispiel durch unterschiedlich starke Druckausübung des Anwenders auf das Handstück und die Behandlungsstelle entstehen, ist es vorteilhaft, die Vorwarnwerte nicht zu nahe am Grenzwert festzulegen. Bevorzugt beträgt der erste Vorwarnwert daher zum Beispiel zumindest 50%, besonders bevorzugt zumindest 75% des Grenzwerts, jedoch jeweils weniger als 95% des Grenzwerts.

Zumindest eine der Anzeigevorrichtungen des Handstücks ist als visuelle oder akustische oder taktile Anzeigevorrichtung ausgebildet. Die visuelle Anzeigevorrichtung weist bevorzugt ein für sichtbares Licht durchlässiges und / oder ein sichtbares Licht leitendes Element auf und ist mit einer Lichtquelle verbindbar oder verbunden. Die taktile oder akustische Anzeigevorrichtung umfasst bevorzugt ein in Vibration versetzbares und / oder Vibrationen übertragendes Element und ist mit einer Schwingungsquelle verbindbar oder verbunden ist. Die Lichtquelle bzw. die Schwingungsquelle können dabei im Handstück, zum Beispiel im Griffbereich des Handstücks oder in dessen Versorgungseinheit, oder außerhalb des Handstücks angeordnet sein.

In einem Ausführungsbeispiel umfasst das Stellelement zum Einschalten, zum Ausschalten und / oder zur Vorgabe der Drehzahl des Antriebselements einen Druckknopf, einen Schalter oder einen Taster, wobei das für sichtbares Licht durchlässige und / oder sichtbares Licht leitende Element oder das in Vibration versetzbare und / oder Vibrationen übertragende Element als Teil des Druckknopfs, Schalters oder Tasters, insbesondere als Druckknopf-, Schalter- oder Tasterdeckel oder als Druckknopf-, Schalter- oder Tastermanschette, ausgebildet ist. Diese Kombination des Stellelements mit der Anzeigevorrichtung stellt eine Platz sparende Lösung dar, insbesondere, wenn das Stellelement und die Anzeigevorrichtung am Griffbereich, Griffelement, Kopf- oder Halsbereich des Handstücks angeordnet sind oder wenn das Handstück als schnurloses Handstück mit einer austauschbaren oder aufladbaren Energiequelle ausgebildet ist.

Ein Verfahren zur Vorbereitung einer medizinischen, insbesondere dentalen, Behandlung oder zur Vorbereitung eines medizinischen, insbesondere dentalen, Behandlungsschrittes umfasst die Schritte:
- zur Verfügung stellen eines Handstücks, das aufweist: Ein Antriebselement zum Antreiben einer in Bewegung versetzbaren Werkzeugaufnahme, eine Drehmomentbegrenzungseinheit zur Begrenzung des auf ein in der Werkzeugaufnahme aufnehmbares Werkzeug wirkenden Drehmoments, wobei in der Drehmomentbegrenzungseinheit mehrere vorbestimmte Drehmomentgrenzwerte hinterlegt sind, ein erstes Stellelement zur Auswahl eines der vorbestimmten Drehmomentgrenzwerte, wobei die vorbestimmten Drehmomentgrenzwerte in einer aufsteigenden Reihenfolge oder in einer absteigenden Reihenfolge auswählbar sind, und eine Steuerschaltung, um das auf das Werkzeug wirkende Drehmoment auf den über das Stellelement auswählbaren Drehmomentgrenzwert zu begrenzen, wobei die Reihenfolge, in der die vorbestimmten Drehmomentgrenzwerte auswählbar sind, umkehrbar ist, und
- Umkehren der Reihenfolge, in der die vorbestimmten Drehmomentgrenzwerte auswählbar sind.

Ein medizinisches, insbesondere dentales, Behandlungsverfahren umfasst die Schritte:
- zur Verfügung stellen eines Handstücks, das aufweist: Ein Antriebselement zum Antreiben einer in Bewegung versetzbaren Werkzeugaufnahme, eine Drehmomentbegrenzungseinheit zur Begrenzung des auf ein in der Werkzeugaufnahme aufnehmbares Werkzeug wirkenden Drehmoments, wobei in der Drehmomentbegrenzungseinheit mehrere vorbestimmte Drehmomentgrenzwerte hinterlegt sind, und ein erstes Stellelement zur Auswahl eines der vorbestimmten Drehmomentgrenzwerte, wobei die vorbestimmten Drehmomentgrenzwerte in einer aufsteigenden Reihenfolge oder in einer absteigenden Reihenfolge auswählbar sind und wobei die Reihenfolge, in der die vorbestimmten Drehmomentgrenzwerte auswählbar sind, umkehrbar ist,
- Umkehren der Reihenfolge, in der die vorbestimmten Drehmomentgrenzwerte auswählbar sind.

In einem zusätzlichen Verfahrensschritt ist die Behandlung von tierischem oder menschlichem Gewebe, insbesondere von dentalem Gewebe, Kieferknochen oder Zahnpulpa, mit dem Handstück vorgesehen. Dieser Verfahrensschritt kann entweder zwischen den beiden oben angeführten Verfahrensschritten erfolgen oder anschließend an den zweiten Verfahrensschritt. Das Umkehren der Reihenfolge ist somit vor dem Betrieb des Handstücks oder während des Betriebs, zum Beispiel in einer Behandlungspause, möglich.

Die Erfindung wird nachfolgend anhand eines bevorzugten Ausführungsbeispiels und Bezug nehmend auf die beigefügten Zeichnungen erläutert:
Figur 1 zeigt ein Ausführungsbeispiel eines Handstücks, bei dem die Reihenfolge, in der die vorbestimmten Drehmomentgrenzwerte auswählbar sind, umkehrbar ist und das eine Steuervorrichtung zur Ermittlung eines Messwerts eines Betriebsparameters des Handstücks, zum Vergleichen des Messwerts mit einem ersten Vorwarnwert, der geringer ist als ein vorbestimmter Grenzwert, und zur Abgabe eines ersten Vorwarn-Steuersignals bei Erreichen oder Überschreiten des ersten Vorwarnwertes, aufweist.
Figur 2 zeigt eine schematische Darstellung der Steuerung und von Steuerelementen des Handstücks der Figur 1.

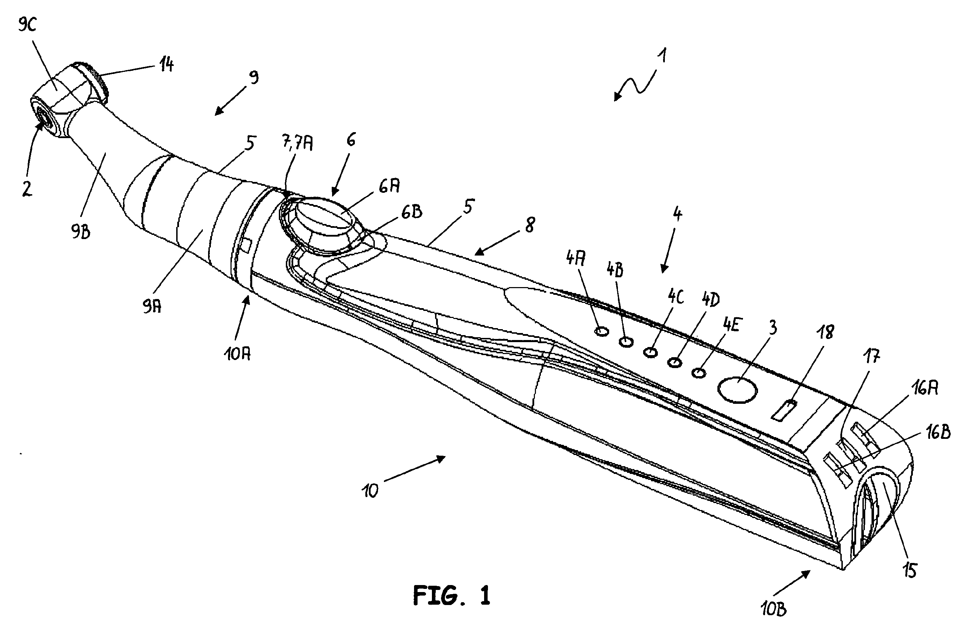

Das in Figur 1 dargestellte Handstück 1 ist als schnurloses, mit Akkumulatoren oder Batterien betriebenes, endodontisches Handstück ausgebildet, das einen Vorderabschnitt 9 und einen daran anschließenden und lösbar damit verbundenen Versorgungsabschnitt 10 aufweist. Die Verbindung zwischen dem Vorderabschnitt 9 und dem Versorgungsabschnitt 10 wird durch eine Kupplungsvorrichtung hergestellt, wobei Kupplungselemente sowohl am Vorderabschnitt 9 als auch am Versorgungsabschnitt 10 vorgesehen sind. Die Kupplungsvorrichtung ist als Steckkupplung oder bevorzugt als Steck-Drehkupplung ausgebildet, wobei bei letzterer ein Kupplungszapfen und eine Kupplungsaufnahme an jeweils einem der beiden Abschnitte 9, 10 angeordnet ist.

Der Vorderabschnitt 9 ist länglich, rohrförmig und gewinkelt ausgebildet und mit einer Außenhülse 5 versehen, von der zumindest ein Teil als Griffelement zum Umgreifen und Halten für den Anwender ausgebildet ist. Er weist einen Anschlussabschnitt 9A, der an den Versorgungsabschnitt 10 anschließt bzw. anschließbar ist und zumindest ein Kupplungselement trägt, einen zum Anschlussabschnitt 9A gewinkelt angeordneten, sich verjüngenden Halsabschnitt 9B und einen daran anschließenden Kopfabschnitt 9C auf. Im Inneren des Kopfabschnitts 9C befindet sich eine in Rotation versetzbare, in Drehlagern gelagerte oder eine in eine Hubbewegung versetzbare, in Dreh- oder Gleitlagern gelagerte Werkzeugaufnahme 2. Durch eine Werkzeugaufnahmeöffnung im Kopfabschnitt 9C ist das Werkzeug in die Werkzeugaufnahme 2 einsetzbar. Die Werkzeugaufnahme 2 ist bevorzugt als kraft- oder formschlüssige Werkzeugaufnahme ausgebildet, die mit einer oder mehreren Antriebswellen verbunden ist, die sich von der Kupplungsvorrichtung durch den Anschlussabschnitt 9A und den Halsabschnitt 9B in Richtung oder bis in den Kopfabschnitt 9C erstrecken. Ein oder mehrere Zahnräder oder Getriebe verbinden die Werkzeugaufnahme 2 und die Wellen bzw. die Wellen untereinander. An dem der Werkzeugaufnahme 2 gegenüberliegenden Ende des Kopfabschnitts 9C befindet sich ein Druckknopf 14, der mit der Werkzeugaufnahme 2 bzw. mit einer Werkzeuglösevorrichtung zusammenwirkt, um ein in der Werkzeugaufnahme 2 aufgenommenes Werkzeug zu lösen.

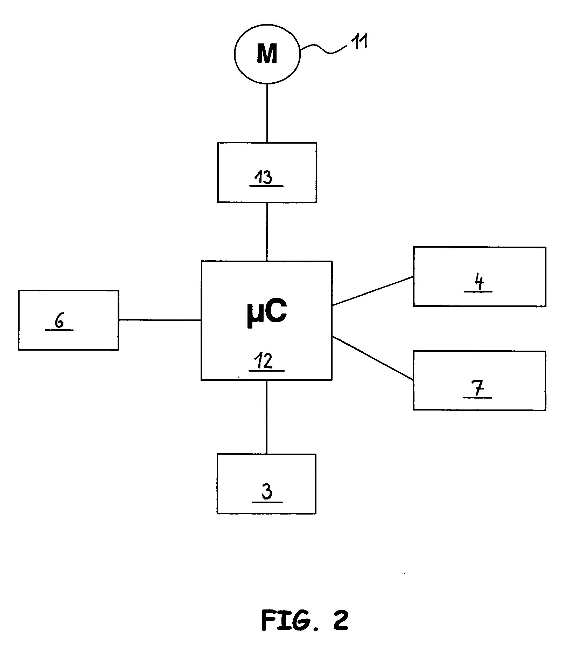

Der Versorgungsabschnitt 10 umfasst ein erstes, dem Vorderabschnitt 9 zugewandtes und zumindest ein Kupplungselement zur Verbindung mit dem Vorderabschnitt 9 aufweisendes Ende 10A und ein zweites, gegenüberliegendes Ende 10B. Die beiden Enden 10A, 10B sind über eine Außenhülse 5 miteinander verbunden, die zumindest teilweise als Griffelement 8 ausgebildet ist. Dazu weist sie insbesondere einen länglichen, rohrförmigen, hohlen und ergonomisch geformten Hülsenkörper auf. Im Inneren des Versorgungsabschnitts 10 sind unter anderem der Antriebsmotor (11, siehe Figur 2), die Steuerung des Handstücks und gegebenenfalls weitere Steuerschaltungen oder Steuerschaltkreise, sowie ein Batterieladefach zur Aufnahme von Batterien oder wieder aufladbaren Akkumulatoren enthalten.

Das Batterieladefach ist über eine am zweiten Ende 10B angeordnete Öffnung, die durch einen drehbaren Batterieladefachdeckel 15 verschließbar ist, zugänglich. Zwei elektrische Ladekontakte 16A, 16B dienen zur Verbindung mit einer Energiequelle zum Aufladen der im Batterieladefach enthaltenen Akkumulatoren. Die beiden Ladekontakte 16A, 16B sind zur Verbindung mit elektrischen Gegenkontakten einer Ladestation ausgebildet. Neben den beiden Ladekontakten 16A, 16B ist am zweiten Ende 10B auch noch ein Kontakt 17 zur Weiterleitung von Temperaturmesswerten der Akkumulatoren vorgesehen, die von einem Temperatursensor im Versorgungsabschnitt 10 des Handstücks 1 gemessen werden. An der Ladestation ist eine Temperaturmessschaltung vorgesehen, die die Temperaturmesswerte auswertet und bei Erreichen oder Überschreiten der Temperatur ein Warnsignal abgibt oder den Ladevorgang unterbricht. Eine Akkumulator-Kapazitätsanzeige 18, die mit einer Füllstands-Messschaltung im Handstück 1 verbunden ist, zeigt den Füllstand des Akkumulators an.

Im Inneren des Versorgungsabschnitts 10 ist auch die Drehmomentbegrenzungseinheit zur Begrenzung des auf ein in der Werkzeugaufnahme 2 aufnehmbares Werkzeug wirkenden Drehmoments enthalten, wobei in der Drehmomentbegrenzungseinheit, insbesondere in einem Nur-Lese-Speicher (ROM), mehrere vorbestimmte Drehmomentgrenzwerte hinterlegt sind. Die Drehmomentbegrenzungseinheit umfasst unter anderem eine Drehmomentermittlungseinrichtung, insbesondere eine Motorstrommessvorrichtung, zur Ermittlung des aktuellen Drehmoments und einen Komparator zum Vergleich des aktuellen Drehmoments mit dem ausgewählten Drehmoment. Über ein erstes Stellelement 3 sind die vorbestimmten Drehmomentgrenzwerte in einer aufsteigenden Reihenfolge oder in einer absteigenden Reihenfolge auswählbar, wobei durch jedes Betätigen des Stellelements 3, ausgehend von einem Drehmomentgrenzwert, der nächst höhere oder niedrige Drehmomentgrenzwert ausgewählt wird. Das Stellelement 3 ist als Taster mit einem Tasterdeckel ausgebildet. Ebenfalls im Versorgungsabschnitt 10 ist die Steuerschaltung angeordnet, die mit dem Komparator verbunden ist. Erhält die Steuerschaltung vom Komparator ein Signal, dass der aktuelle Drehmomentwert den ausgewählten Drehmoment überschreiten, dann stoppt die Steuerschaltung zur Begrenzung des auf das Werkzeug wirkenden Drehmoments das Werkzeug und das Antriebselement, oder kehrt ihre Drehrichtung um oder betreibt sie in einem oszillierenden Betrieb.

Das Handstück 1 ist derart ausgebildet, dass die Reihenfolge, in der die vorbestimmten Drehmomentgrenzwerte auswählbar sind, umkehrbar ist, dies bedeutet, dass der Anwender bei der Auswahl der Drehmomentgrenzwerte zwischen der aufsteigenden Reihenfolge und der absteigenden Reihenfolge umschalten kann. Dazu dient dem Anwender ebenfalls Stellelement 3, das somit als doppelt belegtes Stellelement ausgebildet ist. Abhängig von der Betätigungsdauer des Stellelements 3 ändert der Anwender entweder den Drehmomentgrenzwert oder die Reihenfolge zur Auswahl der Drehmomentgrenzwerte: Ein kurzer Druck auf den Taster 3 und somit ein kurzes vom Taster 3 erzeugtes Stellsignal bewirkt ein Weiterspringen auf den nächst höheren oder niedrigen Drehmomentgrenzwert, wohingegen ein langer Druck auf den Taster 3 und somit ein langes vom Taster 3 erzeugtes Stellsignal die Umkehrung der Reihenfolge bzw. das Umschalten zwischen den beiden Reihenfolgen auslöst. Die Unterscheidung der Betätigungsdauer erfolgt in bekannter Weise durch die Steuerung oder einen separaten Steuerschaltkreis, die mit dem Stellelement 3 verbunden sind und die die Dauer der vom Stellelement 3 eingehenden Stellsignale bestimmen.

An einer anschließend an das Stellelement 3 angeordnete Anzeigevorrichtung 4 kann der Anwender den ausgewählten Drehmomentgrenzwert ablesen. Die Anzeigevorrichtung 4 befindet sich näher am zweiten Ende 10B des Versorgungsabschnitts 10 als an dessen erstem Ende. Für jeden vorbestimmten Drehmomentgrenzwert ist dabei eine separates Anzeigeelement 4A, 4B, 4C, 4D, 4E vorgesehen, das aus einem in einer Öffnung der Außenhülse 5 angeordneten transparentem oder Licht leitendem Anzeigefenster und einer Lichtquelle, insbesondere einer Leuchtdiode, besteht. Die Anzeigevorrichtung 4 ist mit der Steuerung oder einem separatem Steuerschaltkreis verbunden, die direkt oder indirekt durch das bei der Betätigung des Stellelements 3 ausgelöste Stellsignal aktiviert werden und ein Schaltsignal an die Anzeigevorrichtung 4 senden, so dass zumindest das dem ausgewählten Drehmomentgrenzwert entsprechende Anzeigeelement 4A, 4B, 4C, 4D, 4E leuchtet. Zusätzlich können auch alle Anzeigeelemente 4A, 4B, 4C, 4D, 4E, die jenen Drehmomentgrenzwerten zugeordnet sind, die niedriger sind als der ausgewählte Drehmomentgrenzwert, leuchten.

Alternativ leuchten das dem ausgewählten Drehmomentgrenzwert entsprechende Anzeigeelement 4A, 4B, 4C, 4D, 4E und die Anzeigeelemente 4A, 4B, 4C, 4D, 4E der noch auswählbaren Drehmomentgrenzwerte, d.h. bei einer absteigenden Reihenfolge, in der die vorbestimmten Drehmomentgrenzwerte auswählbar sind, noch alle Drehmomentgrenzwerte zwischen dem ausgewählten und dem niedrigsten Drehmomentgrenzwert, bzw. bei einer aufsteigenden Reihenfolge, in der die vorbestimmten Drehmomentgrenzwerte auswählbar sind, noch alle Drehmomentgrenzwerte zwischen dem ausgewählten und dem höchsten Drehmomentgrenzwert.

An der Außenhülse 5, am ersten Ende 10A des Versorgungsabschnitts 10 des Handstücks 1 befindet sich ein weiteres Stellelement 6 zum Einschalten, zum Ausschalten und / oder zur Vorgabe der Drehzahl eines Antriebselements 11, das zum Antreiben der in Bewegung versetzbaren Werkzeugaufnahme 2 vorgesehen ist. Das Stellelement 6 ist wiederum als Taster mit einem Tasterdeckel oder Druckknopf 6A ausgebildet. Rund um das Stellelement 6 bzw. als Teil des Stellelements 6 ist eine weitere Anzeigevorrichtung 7, insbesondere eine visuelle Anzeigevorrichtung 7A, angeordnet. Die Stellelemente 3 und 6 und die ihnen jeweils zugeordneten Anzeigevorrichtung 4 und 7 sind entfernt voneinander, bevorzugt an gegenüberliegenden Enden 10A, 10B des Handstücks 1 oder eines Handstückteils, zum Beispiel des Versorgungsabschnitts 10, angeordnet.

Die Anzeigevorrichtung 7 ist mit einer Steuervorrichtung verbunden, die ebenfalls im Inneren des Versorgungsabschnitts 10 aufgenommen ist. Die Steuervorrichtung dient zur Ermittlung eines Messwerts eines Betriebsparameters des Handstücks 1, insbesondere des Drehmoments oder der Drehzahl, zum Vergleichen des Messwerts mit einem ersten Vorwarnwert, der geringer ist als ein vorbestimmter Grenzwert, insbesondere ein Drehmoment- oder Drehzahlgrenzwert, und zur Abgabe eines ersten Vorwarn-Steuersignals bei Erreichen oder Überschreiten des ersten Vorwarnwertes. Die Ermittlung des Drehmoment-Messwerts erfolgt zum Beispiel wie weiter oben beschrieben über eine Motorstrommessvorrichtung. Die Bestimmung der Drehzahl wird zum Beispiel durch photoelektrische, magnetische oder induktive Drehzahlsensoren bewerkstelligt.

Der Grenzwert ist in der Steuervorrichtung hinterlegt, bevorzugt sind wiederum mehrere Grenzwerte hinterlegt, die, wie weiter oben für den Drehmomentgrenzwert beschrieben, vom Anwender auswählbar sind. Die Grenzwerte sind bevorzugt durch den Hersteller festgelegt und werden bei der Herstellung des Handstücks für den Anwender unveränderbar in der Steuervorrichtung abgespeichert, zum Beispiel auf einem ROM-Speicherelement. Selbstverständlich ist es jedoch auch möglich, die Grenzwerte für den Anwender einstellbar, veränderbar oder überschreibbar auszubilden, zum Beispiel durch zu Verfügung stellen eines Schreib-Lese-Speichers. Bevorzugt sind der oder die Grenzwerte als Drehmomentgrenzwerte ausgebildet und in einer Drehmomentbegrenzungseinheit, wie sie weiter oben beschrieben wurde, hinterlegt.

Der Vorwarnwert ist ebenfalls in der Steuervorrichtung hinterlegt und durch den Hersteller des Handstücks 1 vorbestimmt. Er ist bevorzugt als prozentualer Wert des Grenzwerts ausgebildet, zum Beispiel als 75%-Wert des Grenzwerts. Selbstverständlich ist es auch möglich, mehrere Vorwarnwerte in der Steuervorrichtung abzulegen und diese über ein Stellelement für den Anwender auswählbar zu machen und / oder den Vorwarnwert für den Anwender einstellbar, veränderbar oder überschreibbar auszubilden.

Der Vergleich zwischen dem Messwert und dem Vorwarnwert erfolgt durch einen Komparator. Erkennt der Komparator, dass der Messwert den Vorwarnwert erreicht oder überschritten hat, so generiert er ein erstes Vorwarn-Steuersignal. Die Anzeigevorrichtung 7 ist durch das erste Vorwarn-Steuersignal und somit durch die Steuervorrichtung aktivierbar, wodurch zum Beispiel ein oder mehrere Lichtquellen der Anzeigevorrichtung 7 ein- oder ausgeschaltet werden. Dem Anwender wird somit das Erreichen des Vorwarnwerts, zum Beispiel der 75%-Wert des Drehmomentgrenzwerts, durch die Anzeigevorrichtung 7 mitgeteilt. Wird der Vorwarnwert erreicht oder überschritten, so wird die Lichtquelle in einem besonders bevorzugten Ausführungsbeispiel eingeschaltet, so dass die Anzeigevorrichtung 7 leuchtet. Solange der Vorwarnwert nicht erreicht wird oder sobald er wieder unterschritten wird, wird die Lichtquelle ausgeschaltet und die Anzeigevorrichtung 7 leuchtet nicht mehr.

In einer bevorzugten Weiterbildung des Handstücks 1 ist die Steuervorrichtung des Weiteren zur Abgabe eines zweiten Vorwarn-Steuersignals bei Erreichen oder Überschreiten eines zweiten Vorwarnwerts, der zwischen dem ersten Vorwarnwert und dem Grenzwert liegt, ausgebildet. Die Anzeigevorrichtung 7, 7A, die auch durch das zweite Vorwarn-Steuersignal aktivierbar ist, warnt den Anwender durch Ein- bzw. Ausschalten einer Lichtquelle, dass der zweite Vorwarnwert erreicht oder überschritten wurde. Die Ausbildung des zweiten Vorwarnwerts oder mehrerer zweiter Vorwarnwerte sowie die Wirkungsweise der Steuervorrichtung und des Komparators entsprechen der oben angeführten Beschreibung für den ersten Vorwarnwert.

Der Vorteil dieses bevorzugten Ausführungsbeispiels ist, dass der Anwender das Handstück in einem Vorzugsbereich zwischen den beiden Vorwarnwerten, zum Beispiel zwischen etwa 75% und 85% des Grenzwerts betreiben kann. Dem Anwender wird dabei das Erreichen sowie das Verlassen des Vorzugsbereichs angezeigt, zum Beispiel durch Aufleuchten der Anzeigevorrichtung 7, wenn der 75%-Wert überschritten und gleichzeitig der 85% unterschritten ist, und durch Erlöschen der Anzeigevorrichtung 7, wenn der 75%-Wert unterschritten oder der 85%-Wert überschritten ist. Alternativ erzeugt die Anzeigevorrichtung 7 unterschiedliche Signale, zum Beispiel ein kontinuierliches Leuchten des ersten Vorwarnwerts und ein pulsierendes oder unterbrochenes, blinkendes Leuchten bei Erreichen oder Überschreiten des zweiten Vorwarnwerts.

Die Anzeigevorrichtung 7 ist am Stellelement 6 angeordnet bzw. umfasst einen Teil des Stellelements 6, insbesondere die Manschette 6B des Druckknopfs 6A. Die Manschette 6B ist transparent ausgebildet und besteht bevorzugt aus Kunststoff, so dass das von der Lichtquelle der Anzeigevorrichtung 7 emittierte Licht durch die Manschette 6B hindurch treten kann. Diese Ausbildung der Anzeigevorrichtung 7 ist besonders vorteilhaft, da sie sowohl Platz sparend und als auch für den Anwender, insbesondere während der Arbeit mit dem Handstück 1, sehr gut sichtbar ist. Alternativ oder zusätzlich können weitere Teile des Stellelements, insbesondere der Druckknopf 6A, transparent ausgebildet sein.

Figur 2 zeigt eine schematische Darstellung der Steuervorrichtung des Handstücks 1. Zentrales Element der Steuervorrichtung ist ein Mikrocomputer oder Mikrocontroller 12, der alle Steuerungen, Steuerschaltungen und Steuervorrichtungen des Handstücks 1 umfasst, insbesondere jene Steuerungen, Steuerschaltungen und Steuervorrichtungen, die weiter oben beschrieben wurden. Auch sind im Mikrocontroller 12 alle weiter oben beschriebenen Grenz- und Vorwarnwerte hinterlegt.

Der Mikrocontroller 12 ist über separate Leitungen mit den beiden Anzeigevorrichtungen 4, 7 verbunden und aktiviert bzw. deaktiviert diese, in dem er zum Beispiel Steuersignale an die Lichtquelle zum Ein- oder Ausschalten der Lichtquelle abgibt. Der Mikrocontroller 12 ist über separate Leitungen auch mit den beiden Stellelementen 3, 6 verbunden, um insbesondere Stellsignale von den Stellelementen 3, 6 zu empfangen und diese zu verarbeiten und / oder weiterzuleiten. Zur Energieversorgung ist der Mikrocontroller 12 mit einer Energiequelle verbunden, insbesondere mit den im Batteriefach aufgenommenen Batterien oder Akkumulatoren. Über eine weitere Leitung ist der Mikrocontroller 12 mit einem Antriebselement 11, zum Beispiel einem bürstenlosen Elektromotor, verbunden, um diesen zu steuern bzw. zu regeln und das auf das Werkzeug wirkende Drehmoment zu begrenzen. Zwischen dem Antriebselement 11 und dem Mikrocontroller 12 ist ein Treiber 13 zur Verstärkung der Signalspannung des Antriebselements 11 vorgesehen. Der Treiber 13 kann als Pulsweiten modulierter Treiber oder als linear betriebener Treiber ausgebildet sein.

Die Erfindung ist nicht auf das beschriebene Ausführungsbeispiel beschränkt, sondern umfasst alle Ausführungen, die das prinzipielle, sinngemäße Funktionsprinzip der Erfindung anwenden oder beinhalten. Insbesondere sind die beschriebenen Merkmale einzeln oder in Kombination sowohl in einem kabellosen, bevorzugt Akku- oder batteriebetriebenem, Handstück als auch in Handstücken, die einen Versorgungsschlauch und eine mit dem Versorgungsschlauch verbundene Versorgungs-, Steuer- oder Regeleinheit umfassen, implementierbar. Des Weiteren sind alle beschriebenen Merkmale miteinander kombinierbar und insbesondere in einem einzigen Handstück verwirklichbar.

## Patentansprüche

1. Medizinisches, insbesondere dentales, Handstück (1) umfassend
- ein Antriebselement (11) zum Antreiben einer in Bewegung versetzbaren Werkzeugaufnahme (2),
- eine Drehmomentbegrenzungseinheit zur Begrenzung des auf ein in der Werkzeugaufnahme (2) aufnehmbares Werkzeug wirkenden Drehmoments, wobei in der Drehmomentbegrenzungseinheit mehrere vorbestimmte Drehmomentgrenzwerte hinterlegt sind, und
- ein erstes Stellelement (3) zur Auswahl eines der vorbestimmten Drehmomentgrenzwerte, wobei die vorbestimmten Drehmomentgrenzwerte in einer aufsteigenden Reihenfolge oder in einer absteigenden Reihenfolge auswählbar sind, **dadurch gekennzeichnet, dass**
die Reihenfolge, in der die vorbestimmten Drehmomentgrenzwerte auswählbar sind, umkehrbar ist.

2. Handstück (1) nach Anspruch 1, **dadurch gekennzeichnet, dass**
die vorbestimmten Drehmomentgrenzwerte in einer Endlosschleife auswählbar sind.

3. Handstück (1) nach Anspruch 1 oder 2, **dadurch gekennzeichnet, dass**
zur Umkehrung der Reihenfolge, in der die vorbestimmten Drehmomentgrenzwerte auswählbar sind, ein einfach, ein doppelt oder ein mehrfach belegtes Stellelement (3) vorgesehen ist.

4. Handstück (1) nach Anspruch 3, **dadurch gekennzeichnet, dass** das doppelt oder mehrfach belegte Stellelement (3) durch das erste Stellelement (3) gebildet ist.

5. Handstück (1) nach Anspruch 3 oder 4, **dadurch gekennzeichnet, dass**
das doppelt oder mehrfach belegte Stellelement (3) zur Auswahl der Drehrichtung und / oder zum Aufrufen der Werkseinstellungen und / oder zur Auswahl der Art der Drehrichtungsumkehr und / oder zur Auswahl eines veränderbaren Parameters, insbesondere der Drehzahl oder des Drehmoments, ausgebildet ist.

6. Handstück (1) nach einem der vorhergehenden Ansprüche, **dadurch gekennzeichnet, dass**
durch Betätigung des ersten Stellelements (3) der einem Drehmomentgrenzwert nächst höhere oder nächst niedrige Drehmomentgrenzwert auswählbar ist.

7. Handstück (1) nach einem der vorhergehenden Ansprüche, **gekennzeichnet durch** eine Anzeigevorrichtung (4) mit separaten Anzeigeelementen (4A - 4E) für jeden Drehmomentgrenzwert.

8. Handstück (1) nach einem der vorhergehenden Ansprüche, **dadurch gekennzeichnet, dass**
die Drehmomentbegrenzungseinheit eine Drehmomentermittlungseinrichtung, insbesondere eine Motorstrommessvorrichtung, zur Ermittlung des aktuellen Drehmoments und einen Komparator zum Vergleich des aktuellen Drehmoments mit dem ausgewählten Drehmoment umfasst.

9. Handstück (1) nach einem der vorhergehenden Ansprüche, **dadurch gekennzeichnet, dass**
die Drehmomentbegrenzungseinheit eine Steuerschaltung umfasst, die zur Begrenzung des auf das Werkzeug wirkenden Drehmoments zum Stoppen, zum Umkehren der Drehrichtung oder zum oszillierenden Betrieb des Werkzeugs ausgebildet ist.

10. Medizinisches, insbesondere dentales, Handstück (1) oder Handstück (1) nach einem der vorhergehenden Ansprüche, jeweils umfassend,
- eine Außenhülse (5),
- ein an der Außenhülse vorgesehenes Stellelement (6) zum Einschalten, zum Ausschalten und / oder zur Vorgabe der Drehzahl eines Antriebselements (11), das zum Antreiben einer in Bewegung versetzbaren Werkzeugaufnahme (2) vorgesehen ist, **gekennzeichnet durch**
- eine Steuervorrichtung zur Ermittlung eines Messwerts eines Betriebsparameters des Handstücks (1), insbesondere des Drehmoments oder der Drehzahl, zum Vergleichen des Messwerts mit einem ersten Vorwarnwert, der geringer ist als ein vorbestimmter Grenzwert, und zur Abgabe eines ersten Vorwarn-Steuersignals bei Erreichen oder Überschreiten des ersten Vorwarnwertes, und **durch**
- eine mit der Steuervorrichtung verbundene Anzeigevorrichtung (7), die **durch** das erste Vorwarn-Steuersignal aktivierbar ist.

11. Handstück (1) nach Anspruch 10, **dadurch gekennzeichnet, dass** die Steuervorrichtung des Weiteren zur Abgabe eines zweiten Vorwarn-Steuersignals bei Erreichen oder Überschreiten eines zweiten Vorwarnwertes, der zwischen dem ersten Vorwarnwert und dem Grenzwert liegt, ausgebildet ist.

12. Handstück (1) nach Anspruch 10 oder 11, **dadurch gekennzeichnet, dass**
die Anzeigevorrichtung (7) am oder angrenzend an das Stellelement (3) zur Steuerung des Antriebselements (11) angeordnet ist.

13. Handstück (1) nach einem der Ansprüche 10, 11 oder 12, **dadurch gekennzeichnet, dass**
der Grenzwert und / oder zumindest der erste oder der zweite Vorwarnwert einstellbar sind.

14. Handstück (1) nach einem der Ansprüche 10 - 13, **dadurch gekennzeichnet, dass**
der erste Vorwarnwert zumindest 50%, bevorzugt zumindest 75% des Grenzwerts beträgt.

15. Handstück (1) nach einem der Ansprüche 10 - 14, **dadurch gekennzeichnet, dass**
die Außenhülse (5) zumindest teilweise als Griffelement (8) ausgebildet ist.

16. Handstück (1) nach einem der Ansprüche 10 - 15, **dadurch gekennzeichnet, dass**
das Handstück (1) einen Vorderabschnitt (9) mit einer Werkzeugaufnahme (2) und einen damit verbundenen Versorgungsabschnitt (10) mit einem dem Vorderabschnitt (9) zugewandten, ersten Ende (10A) und einem zweiten Ende (10B) aufweist, wobei das Stellelement (6) zum Einschalten, zum Ausschalten und / oder zur Vorgabe der Drehzahl des Antriebselements (11) am Vorderabschnitt (9) oder am Versorgungsabschnitt (10), näher zum ersten Ende (10A) als zum zweiten Ende (10B) angeordnet, vorgesehen ist.

17. Handstück (1) nach einem der Ansprüche 10 - 16, **dadurch gekennzeichnet, dass**
die Anzeigevorrichtung (7) als visuelle Anzeigevorrichtung (7A) ausgebildet ist.

18. Handstück (1) nach Anspruch 17, **dadurch gekennzeichnet, dass**
die visuelle Anzeigevorrichtung (7A) ein für sichtbares Licht durchlässiges und / oder sichtbares Licht leitendes Element aufweist und mit einer Lichtquelle verbindbar oder verbunden ist.

19. Handstück (1) nach einem der Ansprüche 10 - 18, **dadurch gekennzeichnet, dass**
die Anzeigevorrichtung als taktile oder akustische Anzeigevorrichtung ausgebildet ist.

20. Handstück (1) nach Anspruch 19, **dadurch gekennzeichnet, dass**
die taktile oder akustische Anzeigevorrichtung ein in Vibration versetzbares und / oder Vibrationen übertragendes Element aufweist und mit einer Schwingungsquelle verbindbar oder verbunden ist.

21. Handstück (1) nach Anspruch 18 oder 20, **dadurch gekennzeichnet, dass**
das Stellelement (6) zum Einschalten, zum Ausschalten und / oder zur Vorgabe der Drehzahl des Antriebselements (11) einen Druckknopf (6A), einen Schalter oder einen Taster umfasst, wobei das für sichtbares Licht durchlässige und / oder sichtbares Licht leitende Element oder das in Vibration versetzbare und / oder Vibrationen übertragende Element einen Teil des Druckknopfs (6A), Schalters oder Tasters, insbesondere den Druckknopf-, Schalter- oder Tasterdeckel oder die Druckknopf-, Schalter- oder Tastermanschette (6B), umfasst.

22. Handstück (1) nach einem der vorhergehenden Ansprüche, **dadurch gekennzeichnet, dass**
das Handstück (1) als schnurloses Handstück (1) mit einer austauschbaren oder aufladbaren Energiequelle ausgebildet ist.

23. Verfahren zur Vorbereitung einer medizinischen, insbesondere dentalen, Behandlung oder zur Vorbereitung eines medizinischen, insbesondere dentalen, Behandlungsschrittes, **gekennzeichnet durch** die Schritte:
- zur Verfügung stellen eines Handstücks (1) nach einem der vorhergehenden Ansprüche,
- Umkehren der Reihenfolge, in der die vorbestimmten Drehmomentgrenzwerte auswählbar sind.

## Geänderte Patentansprüche

### Geänderte Patentansprüche gemäss Regel 137(2) EPÜ.

**1.** Medizinisches, insbesondere dentales, Handstück (1) umfassend,
- eine Außenhülle (5),
- ein an der Außenhülse vorgesehenes Stellelement (6) zum Einschalten, zum Ausschalten und / oder zur Vorgabe der Drehzahl eines Antriebselements (11), das zum Antreiben einer in Bewegung versetzbaren Werkzeugaufnahme (2) vorgesehen ist,
- einen Vorderabschnitt (9) mit einer Werkzeugaufnahme (2) und einen damit verbundene Versorgungsabschnitt (10) mit einem dem Vorderabschnitt (9) zugewandte, ersten Ende (10A) und einem zweiten Ende (10B), wobei das Stellelement (6) zum Einschalten, zum Ausschalten und / oder zur Vorgabe der Drehzahl des Antriebselements (11) am Vorderabschnitt (9) oder am Versorgungsabschnitt (10), näher zum ersten Ende (10A) als zum zweiten Ende (10B) angeordnet, vorgesehen ist,
- eine Drehmomentbegrenzungseinheit zur Begrenzung des auf ein in der Werkzeugaufnahme (2) aufnehmbares Werkzeug wirkenden Drehmoments, wobei In der Drehmomentbegrenzungseinheit mehrere vorbestimmte Drehmomentgrenzwerte hinterlegt sind,
- eine erste Anzeigevorrichtung (4) mit separaten Anzeigeelementen (4A - 4E) für jeden Drehmomentgrenzwert, **gekennzeichnet durch**
- eine Steuervorrichtung zur Ermittlung eines Messwerts eines Betriebsparameters des Handstücks (1), insbesondere des Drehmoments oder der Drehzahl, zum Vergleichen des Messwerts mit einem ersten Vorwamwert, der geringer ist als ein vorbestimmter Grenzwert, und zur Abgabe eines ersten Vorwarn-Steuersignals bei Erreichen oder Überschreiten des ersten Vorwarnwertes, und **durch**
- eine mit der Steuervorrichtung verbundene zweite Anzeigevorrichtung (7), die durch das erste Vorwarn-Steuersignal aktivierbar ist, wobei die zweite Anzeigevorrichtung (7) am oder angrenzend an das Stellelement (6) zum Einschalten, zum Ausschalten und / oder zur Vorgabe der Drehzahl eines Antriebselements (11) angeordnet ist.

**2.** Handstück (1) nach Anspruch 1, **dadurch gekennzeichnet, dass**
die Steuervorrichtung des Weiteren zur Abgabe eines zweiten Vorwarn-Steuersignals
bei Erreichen oder Überschreiten eines zweiten Vorwarnwertes, der zwischen dem ersten Vorwarnwert und dem Grenzwert liegt, ausgebildet ist.

**3.** HandstücK (1) nach Anspruch 1 oder 2, **dadurch gekennzeichnet, dass**
der Grenzwert und / oder zumindest der erste oder der zweite Vorwarnwert einstellbar sind.

**4.** Handstück (1) nach einem der vorhergehenden Ansprüche, **dadurch gekennzeichnet, dass**
der erste Vorwarnwert zumindest 50%, bevorzugt zumindest 75% des Grenzwerts beträgt.

**5.** Handstück (1) nach einem der vorhergehenden Ansprüche, **dadurch gekennzeichnet, dass**
die Außenhülse (5) zumindest teilweise als Griffelement (8) ausgebildet ist.

**6.** Handstück (1) nach einem der vorhergehenden Ansprüche, **dadurch gekennzeichnet, dass**
die zweite Anzeigevorrichtung (7) als visuelle Anzeigevorrichtung (7A) ausgebildet ist.

**7.** Handstück (1) nach Anspruch 6, **dadurch gekennzeichnet, dass**
die visuelle Anzeigevorrichtung (7A) ein für sichtbares Licht durchlässiges und / oder sichtbares, Licht leitendes Element aufweist und mit einer Lichtquelle verbindbar oder verbunden ist.

**8.** Handstück (1) nach einem der vorhergehenden Ansprüche, **dadurch gekennzeichnet, dass**
die zweite Anzeigevorrichtung (7) als taktile oder akustische Anzeigevorrichtung ausgebildet ist.

**9.** Handstück (1) nach Anspruch 8, **dadurch gekennzeichnet, dass**
die taktile oder akustische Anzelgevorrlchtung ein in Vibration versetzbares und / oder Vibrationen übertragendes Element aufweist und mit einer Schwingungsquelle verbindbar oder verbunden ist.

**10.** Handstück (1) nach Anspruch 7 oder 9, **dadurch gekennzeichnet, dass**
das Stellelement (6) zum Einschalten, zum Ausschalten und / oder zur Vorgabe der Drehzahl des Antriebselements (11) einen Druckknopf (6A), einen Schalter oder einen Taster umfasst, wobei das für sichtbares Licht durchlässige und oder sichtbares Licht leitende Element oder das in Vibration versetzbare und / oder Vibrationen übertragende Element einen Teil des Druckknopfs (6A), Schalters oder Tasters, insbesondere den Druckknopf-, Schalter- oder Tasterdeckel oder die Druckknopf-, Schalter- oder Tastermanschette (6B), umfasst.

**11.** Handstück (1) nach einem der vorhergehenden Ansprüche, **dadurch gekennzeichnet, dass**
das Handstück (1) als schnurloses Handstück (1) mit einer austauschbaren oder aufladbaren Energiequelle ausgebildet ist.

**12.** Handstück (1) nach einem der vorhergehenden Ansprüche, **gekennzeichnet durch** ein Stellelement (3) zur Auswahl eines der vorbestimmten Drehmomentgrenzwerte, wobei die vorbestimmten Drehmomentgrenzwerte in einer aufsteigenden Reihenfolge oder in einer absteigenden Reihenfolge auswählbar sind und wobei die Reihenfolge, in der die vorbestimmten Drehmomentgrenzwerte auswählbar sind, umkehrbar ist.

**13.** Handstück (1) nach Anspruch 12, **dadurch gekennzeichnet, dass** die vorbestimmten Drehmomentgrenzwerte in einer Endlosschleife auswählbar sind.

**14.** Handstück (1) nach Anspruch 12 oder 13, **dadurch gekennzeichnet, dass** zur Umkehrung der Reihenfolge, in der die vorbestimmten Drehmomentgranzwerte auswählbar sind, ein einfach, ein doppelt oder ein mehrfach belegtes Stellelement (3) vorgesehen ist.

**15.** Handstück (1) nach Anspruch 14, **dadurch gekennzeichnet, dass** das doppelt oder mehrfach belegte Stellelement (3) zur Auswahl eines der vorbestimmten Drehmomentgrenzwerte und zur Umkehrung der Reihenfolge, in der die vorbestimmten Drehmomentgrenzwerte auswählbar sind, ausgebildet ist.

**16.** Handstück (1) nach Anspruch 14 oder 15, **dadurch gekennzeichnet, dass** das doppelt oder mehrfach belegte Stellelement (3) zur Auswahl der Drehrichtung und / oder zum Aufrufen der Werkseinstellungen und / oder zur Auswahl der Art der Drehrichtungsumkehr und / oder zur Auswahl eines veränderbaren Parameters, insbesondere der Drehzahl oder des Drehmoments, ausgebildet ist.

**17.** Handstück (1) nach einem der Ansprüche 12 - 16, **dadurch gekennzeichnet, dass** durch Betätigung des Stellelements (3) zur Auswahl eines der vorbestimmten Drehmomentgrenzwerte der einem Drehmomentgrenzwert nächst höhere oder nächst niedrige Drehmomentgrenzwert auswählbar ist.

**18.** Handstück (1) nach einem der vorhergehenden Ansprüche, **dadurch gekennzeichnet, dass**
die Drehmomentbegrenzungseinheit eine Drehmomentermittlungseinrichtung, insbesondere eine Motorstrommessvorrichtung, zur Ermittlung des aktuellen Drehmoments und einen Komparator zum Vergleich des aktuellen Drehmoments mit dem ausgewählte Drehmoment umfasst.

**19.** Handstück (1) nach einem der vorhergehenden Ansprüche, **dadurch gekennzeichnet, dass**
die Drehmomentbegrenzungseinheit eine Steuerschaltung umfasst, die zur Begrenzung des auf das Werkzeug wirkenden Drehmoments zum Stoppen, zum Umkehren der Drehrichtung oder zum oszillierenden Betrieb des Werkzeugs ausgebildet ist.

**20.** Handstück (1) nach einem der Ansprüche 2 - 19, **gekennzeichnet durch** eine mit der Steuervorrichtung verbundene, insbesondere visuelle, Anzeigevorrichtung (7), die **durch** das zweite Vorwarn-Steuersignal aktivierbar ist,

**21.** HandstücK (1) nach einem der vorhergehenden Ansprüche, **dadurch gekennzeichnet, dass**
die erste Anzeigevorrichtung (4) sich näher am zweiten Ende (10B) des Versorgungsabschnitts (10) als an dessen erstem Ende (10A) befindet oder am zweiten Ende (10B) des Handstücks (1) angeordnet ist.
